# FASCICULE DE BREVET EUROPEEN

(11) **EP 1 554 133 B1**
(45) Date de publication et mention de la délivrance du brevet: **21.05.2008**
(21) Numéro de dépôt: 03757961.2
(22) Date de dépôt: 13.10.2003
(51) Int. Cl.: B60C 15/00

(54) **PNEUMATIQUE A MOBILITE ETENDUE AVEC BOURRELET A REPARTITION D'EFFORT SYMETRIQUE**
WULST MIT SYMMETRISCHER KRAFTVERTEILUNG FÜR EINEN NOTLAUFREIFEN
EXTENDED MOBILITY TYRE COMPRISING BEAD WITH SYMMETRICAL FORCE DISTRIBUTION

(30) Priorité: 14.10.2002 FR 0212754
(43) Date de publication de la demande: 20.07.2005
(73) Titulaire: Société de Technologie Michelin, 63000 Clermont-Ferrand (FR); Michelin Recherche et Technique S.A., 1763 Granges-Paccot (CH)
(72) Inventeur: GUERINON, Bernard, F-63100 Clermont-Ferrand (FR); JARDINE, David, F-63000 Clermont-Ferrand (FR); ANDERSON, James, Robert, Simpsonville, SC 29681 (US); DRIEUX, Jean-Jacques, F-63530 Volvic (FR)
(74) Mandataire: Dequire, Philippe Jean-Marie Denis
(86) Numéro de dépôt international: PCT/EP2003/011292
(87) Numéro de publication internationale: WO 2004/035327

(56) Documents cités:
- WO-A-01/39999
- WO-A-99/64225

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure. Ce type de conception est particulièrement adapté aux nouvelles générations de pneumatiques pouvant être utilisés, dans certaines limites, dans des conditions de faible pression, voire de pression nulle ou quasi-nulle, avec une élimination du risque de désolidarisation du pneu de la jante sur laquelle il est monté. Ce concept est souvent désigné par l'expression "mobilité étendue".

Depuis longtemps les fabricants de pneumatiques tentent de mettre au point un pneumatique ne créant aucune source de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets risquent fortement de se désolidariser du pourtour de la jante contre lequel ils étaient maintenus par la pression.

De nombreuses solutions ont été testées afin de pallier ces inconvénients. Souvent ces solutions engendrent des difficultés supplémentaires au niveau du montage et du démontage du pneu sur la jante.

Par ailleurs, la fonction serrage du pneumatique sur la jante est une fonction essentielle pour assurer les qualités du pneumatique en fonctionnement. En effet, elle agit directement ou indirectement sur de multiples aspects tels le montage (parfois désigné « clipsage ») ou fixation du pneumatique, l'étanchéité du pneumatique, la non rotation sur jante, etc. Ces fonctions sont toutes importantes et nécessitent des caractéristiques spécifiques et une fabrication rigoureuse des produits, en particulier si des standards de qualité élevés sont recherchés. Hors, les jantes et les pneumatiques ont souvent, pour une dimension donnée, des dimensions réelles ou cotes légèrement différentes, principalement dues aux tolérances de fabrication. Ces variations de dimensions compliquent le respect des différentes fonctions préalablement énumérées.

Pour remplir ces fonctions, on utilise industriellement deux grands types de solutions. Tout d'abord, pour les pneumatiques traditionnels, la tringle assure simultanément toutes ces fonctions.

Plus récemment, pour plusieurs types de produits manufacturés par la demanderesse, la tringle classique est remplacée par une zone d'ancrage comportant notamment des arrangements de fils circonférentiels coopérant avec la structure de renfort de type carcasse via un mélange d'ancrage ou de liaison. Là encore, la zone d'ancrage assure toutes les fonctions présentées ci-dessus.

Dans ces deux cas, il est toutefois difficile d'optimiser certains paramètres, car très souvent, l'amélioration de l'un, se fait au détriment d'un autre. Ce jeu de compromis entre gain d'un côté et pénalisation d'un autre, comporte donc certaines limites, puisqu'il est souvent difficile de tolérer de moins bonnes performances pour certains aspects.

Le document EP 0 582 196 présente un pneumatique comportant une bande de roulement prolongée par deux flancs et deux bourrelets ainsi qu'une carcasse encrée dans les deux bourrelets à un renforcement annulaire. La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire. Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité. Ce mode de réalisation est destiné aux pneumatiques de type classique, avec maintien des bourrelets contre le crochet de jante dû à la pression de gonflage du pneumatique. On retrouve dans ce type d'agencement une prédominance d'efforts orientés dans le sens latéral ou axial, induisant d'importantes forces de compression agissant sensiblement axialement depuis les parois vers le centre dudit bourrelet. Ces forces augmentent en fonction de la pression de gonflage. L'augmentation de la pression tend à faire glisser le bourrelet contre le crochet, radialement vers l'extérieur. Les efforts induits radialement vers l'intérieur, contre le siège de la jante , diminuent avec l'augmentation de la pression, ou avec toute augmentation de la tension de la structure de renfort de type carcasse.

On remarque par ailleurs que les piles de fils sont alignées dans un sens sensiblement parallèle à l'orientation du profil du crochet de jante contre lequel le bourrelet s'appuie. Le profil du bourrelet de ce type de pneumatique est relativement étroit et allongé; l'ancrage est réparti sur l'essentiel de la hauteur et de la largeur du bourrelet. Le passage de la carcasse dans le bourrelet est généralement sensiblement central par rapport aux parois dudit bourrelet. Par ailleurs, s'agissant d'un bourrelet relativement étroit sujet à des efforts à prédominance axiale, ni la pression de gonflage, ni la tension induite dans la carcasse ne permettent la génération d'important moments ou couples, tendant à faire pivoter ou tourner le bourrelet sur lui-même.

Avec un tel type de pneumatique, si la pression chute et que le roulage se poursuit, le maintien du pneumatique sur la jante n'est plus assuré, et dans la plupart des cas, il se produit un déjantage.

Le document EP 0 673 324 décrit un ensemble roulant comprenant au moins un pneumatique à armature de carcasse radiale ancrée dans chaque bourrelet et une jante de conformation particulière. Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante: Le pneumatique comporte des sièges de bourrelets adaptés pour un montage sur cette jante. Le type d'interface pneumatique/jante proposé dans ce document présente de nombreux avantages par rapport aux solutions déjà connues, notamment au niveau de la facilité de montage/démontage tout en permettant d'effectuer un certain parcours malgré une chute de pression.

Le document EP 0 748 287 décrit une solution permettant une première optimisation de la technologie de base décrite dans le document EP 0 673 324 préalablement cité. Il s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale. Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement de la tringle vers l'extérieur, afin que cette dernière génère ladite force de compression. Dans une telle configuration, la présence d'une tringle de type classique et le retournement de la carcasse sous cette dernière sont présentés comme étant indispensables pour générer la force de compression. Ceci limite les possibilités d'envisager d'autres types d'agencement.

D'autre part, le document EP 0 922 592, décrit deux modes de réalisations avec ancrage de la carcasse par retournement de celle-ci axialement vers l'extérieur. Le premier mode propose un ancrage de la carcasse dans le bourrelet par retournement radialement vers l'extérieur de l'extrémité de la carcasse. Le retournement est entouré de part et d'autre par deux couches radialement superposées de fils métalliques disposés axialement côte à côte et couvrant sensiblement toute la portion axiale le long du siège du bourrelet. Les couches sont agencées de façon à être parallèles au siège. Les types de fils ainsi que les dimensions correspondantes sont très précises. La seconde solution proposée dans ce document concerne des sièges de bourrelets avec des diamètres différents. L'arrimage de la carcasse s'effectue également de façon différente par rapport à la première solution. Tout d'abord, la carcasse se subdivise en deux portions radialement séparées au niveau du bourrelet. Chaque portion est adjointe d'une couche de fils disposée radialement, chaque couche étant disposée radialement extérieurement contre chacune des portions de carcasse. La portion de carcasse radialement extérieure et la couche de fils radialement à l'intérieur sont séparées par un insert de type élastomère à dureté élevée prévu dans le bourrelet. Cet insert garnit axialement la portion centrale du bourrelet et remonte radialement vers l'extérieur et axialement vers l'intérieur, au-delà de la limite radiale de présence des fils métalliques.

Les deux exemples de solutions du document EP 0 922 592 comportent plusieurs inconvénients. Ainsi, l'arrimage de la carcasse proposé dans ce document nécessite la présence d'un retournement axialement vers l'extérieur de la portion d'extrémité de la carcasse. D'autre part, les couches de fils superposées sont disposées radialement près du siège du bourrelet, en bonne partie à une position radiale plus près de l'axe de rotation que la portion haute du rebord sur lequel le bourrelet appuie. A moins d'utiliser des fils fortement extensibles, le montage/démontage du pneumatique est difficile à exécuter, dû à la position radiale défavorable des fils. On remarque également que les piles sont orientées de façon sensiblement parallèle au profil du siège contre lequel le bourrelet appuie. Selon la seconde solution, la carcasse se subdivise en deux portions et un insert à dureté élevé est nécessaire pour séparer d'une part les couches de fils et d'autre part les deux portions de carcasse. L'ancrage de la carcasse n'est cependant pas réalisé dans l'insert. La forme de l'insert décrit est limitative.

Le document WO 01/39999, correspondant au préambule de la revendication 1, décrit un pneumatique à mobilité étendue dont chacun des bourrelets comporte un siège inversé, une zone d'ancrage, une zone d'appui et une zone de transition. Chacune des zones prises isolément de même que l'ensemble des zones forment en quelque sorte un bourrelet interne susceptible d'effectuer des mouvements relatifs, comme par exemple de type angulaire ou en rotation, par rapport à une autre zone, ou par rapport à un centre de pression CP virtuel, ou par rapport au siège de la jante, etc.

De préférence, ladite zone d'appui est sensiblement allongée. Elle se prolonge par exemple sensiblement le long du siège du bourrelet. Le transfert des efforts lors de la rotation de la zone basse de la portion axialement interne vers la portion axialement externe est ainsi possible, tout en conservant un appui contre au moins une portion du siège du bourrelet. Le transfert des efforts assure un auto-serrage de la pointe du bourrelet contre la jante.

La présente invention propose donc de pallier les différents inconvénients inhérents aux solutions exposées ci-dessus.

Pour ce faire, elle prévoit un pneumatique selon les termes de la revendication 1.

Une telle configuration permet de répartir de manière optimale les efforts au niveau de la zone d'ancrage, en particulier au niveau de l'arrangement de fils circonférentiels. On évite par exemple d'avoir des écarts importants tant dans la nature que dans le niveau des contraintes subies par les différents fils de l'arrangement, comme par exemple, que certains fils soient sujets à des efforts de tension, alors que d'autres sont sujets à des efforts de compression.

Cette répartition plus uniforme des contraintes est particulièrement avantageuses pour certains types de pneumatiques, notamment ceux dont la hauteur de flanc est importante, comme pour les véhicules de type « SUV ».

Selon une variante de réalisation avantageuse du pneumatique selon l'invention, entre des valeurs correspondant sensiblement à une pression nulle et une pression normale de fonctionnement, la répartition de pression le long de la zone d'appui est sensiblement indépendante de ladite valeur de la pression. Lors du gonflage du pneumatique, les effets induits sur la répartition des efforts le long de l'interface entre la zone d'appui et le siège de la jante n'affectent pas de manière importante ladite répartition. On obtient une stabilité dynamique, par rapport à la dynamique de gonflage, qui permet de mieux garantir un bon serrage sur jante, quelle que soit la condition et indépendamment des tolérances. Les contraintes internes, en particulier au niveau du bourrelet du pneumatique, sont dynamiquement stables, contribuant à la pérennité du produit. La stabilité dynamique permet aussi d'éviter l'apparition de contraintes parasites au niveau du bourrelet, comme par exemple des contraintes susceptibles d'affecter les propriétés ou les qualités du produit. Par ailleurs, la sensibilité aux variations de tolérances de l'assemblage jante/pneumatique est réduite.

De manière avantageuse, une zone latérale extérieure est disposée dans la zone du bourrelet prévue pour être placée entre le rebord ou crochet de jante et la zone d'ancrage. Cette zone est meublée de préférence par un mélange caoutchoutique de module relativement élevé, par exemple compris entre 10 et 40 Mpa.

De manière avantageuse, la zone latérale extérieure est prévue dans la portion axialement externe du bourrelet et s'étend entre la portion adjacente au crochet de jante et la zone d'ancrage. Elle coopère avantageusement avec la zone d'ancrage, ce qui permet une meilleure action mécanique entre ladite zone d'ancrage et la portion du bourrelet adjacente au crochet de jante.

Cette zone permet d'augmenter la pression de serrage, notamment dans la région du crochet de jante. Grâce à sa déformabilité réduite, elle permet de limiter la tendance du bourrelet à glisser radialement extérieurement au-delà du crochet de jante. Elle contribue par ailleurs d'une part à inhiber toute tendance à générer un moment de rotation, et d'autre part à établir une stabilité dynamique, comme par exemple lors de virages ou de sollicitations latérales importantes.

De manière avantageuse, les dits efforts de la structure de renfort engendrent une pression de serrage du bourrelet sensiblement symétrique, ou faiblement asymétrique de part et d'autre de la structure de renfort.

Une telle configuration permet de tendre vers l'obtention d'une pression de serrage sensiblement uniforme le long du siège du bourrelet. Les propriétés/qualités énoncées ci-dessus sont ainsi encore optimisées. En absence de déséquilibres importants, on obtient une excellente stabilité de montage et une curabilité accrue.

L'arrangement de fils circonférentiels de la zone d'ancrage est réparti de façon symétrique de part et d'autre de la structure de renfort.

La zone d'ancrage est avantageusement à proximité immédiate du centre d'inertie du bourrelet. Cela permet de minimiser la tendance du bourrelet à tourner sur lui-même ; on diminue de ce fait une source importante de déséquilibres des contraintes. Selon un exemple de réalisation avantageux, le centre d'inertie se situe dans la zone d'ancrage, de préférence à proximité immédiate (ou même confondu) de la structure de renfort.

La zone d'ancrage ne comporte pas de tringle, notamment de tringle de type traditionnel, comme par exemple une tringle multifilaire contre laquelle une nappe carcasse est retournée, de façon à ce que la zone de coopération entre la portion retournée de nappe et la tringle procure le maintien de la nappe carcasse.

La structure de renfort des flancs et du sommet est avantageusement de type carcasse, ses propriétés mécaniques s'apparentant à celles des nappes carcasses de type conne. Par ailleurs, cette structure de renfort est avantageusement configurée sans séparation axiale au niveau du bourrelet. Ainsi, tous les fils de l'agencement circonférentiel occupent de préférence une position axiale sensiblement identique.

La zone d'appui est destinée à être au contact du siège de jante.

De manière préférentielle, la zone d'appui est sensiblement constituée d'un mélange de gomme à haut module.

La présence d'une zone de gomme à haut module dans une portion radialement interne par rapport au rebord procure un bon maintien axial et évite que le bourrelet glisse axialement vers l'extérieur.

Selon un mode de fabrication particulièrement avantageux où les différents constituants du pneumatique sont disposés directement sur un noyau central dont la forme confère au pneumatique en cours de fabrication une forme sensiblement similaire à la forme du produit fini, la suppression du retournement (qui existe avec une architecture traditionnelle) permet une simplification avantageuse de la fabrication.

Selon une forme d'exécution avantageuse de l'invention, les bases des piles (les fils radialement les plus près de l'axe de rotation du pneumatique) sont disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante adaptée au pneumatique. Les opérations de montage/démontage sont alors facilitées.

De manière avantageuse, la structure de renfort de type carcasse s'étend sensiblement radialement depuis chacun des bourrelets, le long des flancs, vers la zone sommet. Ladite structure peut ainsi être unitaire et s'étendre d'un bourrelet à l'autre, ou encore être partagée en deux demi-structures, s'étendant chacune le long d'un seul flanc.

Le nombre de piles ainsi que le nombre d'enroulements ou de spires de chacune des piles est avantageusement établi en fonction des caractéristiques recherchées pour le pneumatique, par exemple sa pression de service. Par exemple, un nombre de piles plus élevé peut être souhaité afin d'augmenter la rigidité au niveau de la zone du bourrelet.

La structure de renfort de type carcasse est de préférence constituée d'un enroulement filaire faisant des aller-retours entre les deux bourrelets en formant dans chacun des bourrelets des boucles. Par ailleurs, l'enroulement filaire est préférablement constitué d'un seul fil.

Selon une autre variante avantageuse, le bourrelet intérieur prévu pour être disposé du côté interne de la roue et le bourrelet extérieur prévu pour être installé sur le côté externe de la roue, sont agencés de façon asymétrique. Ainsi par exemple, le nombre de piles ou le nombre de spires de chacune des piles peut être différent, par exemple de manière à ce que le nombre de piles de fils dans le bourrelet côté intérieur soit différent du nombre de piles de fils dans le bourrelet côté extérieur.

Selon un autre aspect, la symétrie concerne les agencements des zones d'ancrage et d'appui. Chacun des bourrelets peut présenter des architectures différentes où par exemple, les formes, les dispositions, les dimensions d'une ou plusieurs des zones peuvent varier. On peut aussi faire varier les matériaux constituants, les caractéristiques mécaniques, comme par exemple la dureté, tout comme on peut faire varier le nombre de zones.

D'autres caractéristiques et avantages de l'invention apparaîtront à la lecture des exemples de réalisation du pneumatique conforme à l'invention, donnés à titre non limitatif et en se référant aux figures 1 à 3 annexées, dans lesquelles:
la figure 1 illustre, en coupe transversale, un pneumatique selon l'invention;
la figure 2 illustre, en coupe transversale agrandie, un bourrelet d'une première variante d'un pneumatique selon l'invention;
la figure 3 illustre, en coupe transversale agrandie, un bourrelet d'une seconde variante d'un pneumatique selon l'invention;

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

D'autre part, on entend par structure radiale, un agencement à 90 degrés, mais aussi, selon l'usage, à un angle proche de 90°.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil est en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entent par "module d'élasticité" d'un mélange caoutchoutique, un module d'extension sécant obtenu à une déformation d'extension uniaxiale de l'ordre de 10% à température ambiante.

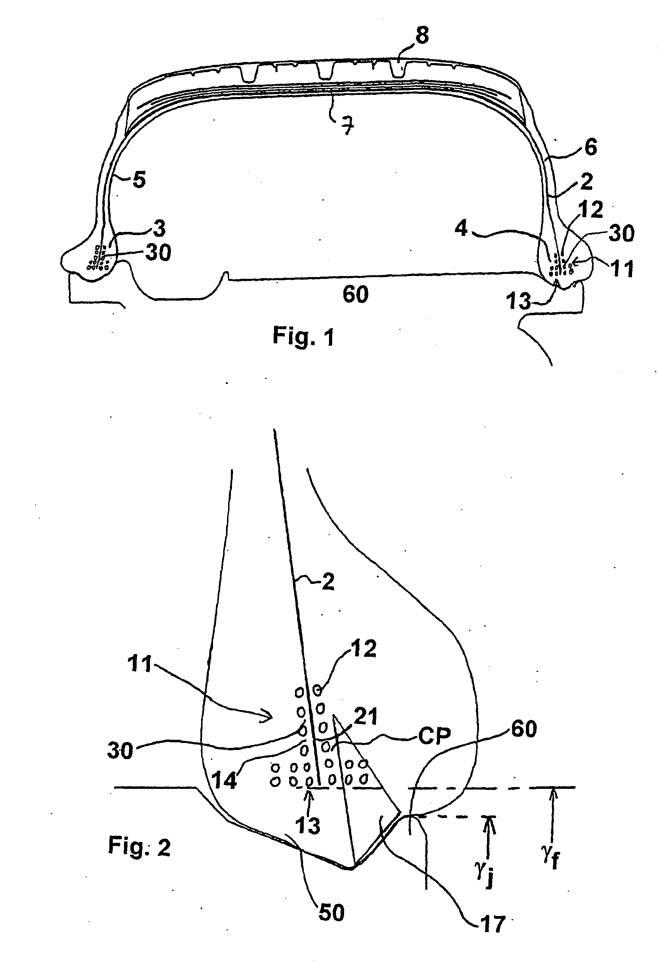

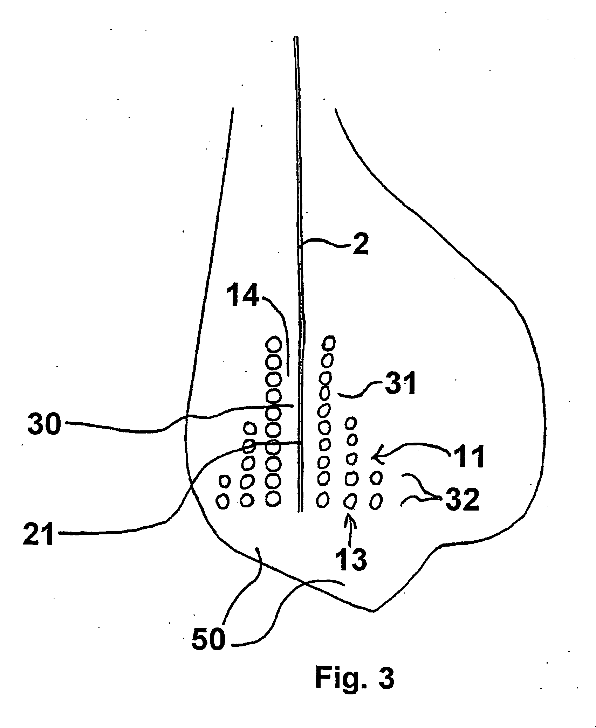

On entend par «pile», une superposition sensiblement radiale de plusieurs fils ou de plusieurs tours d'un même fil, lorsque le bourrelet est vu en coupe dans le plan diamétral comme sur les figures 2 ou 3.

La figure 1 illustre, en coupe transversale, un pneumatique 1 selon l'invention. Ce pneumatique comprend un premier flanc 5 adjacent à un premier bourrelet 3 correspondant de préférence au bourrelet intérieur. De façon similaire, la portion opposée du pneumatique comprend un second flanc 6 adjacent à un second bourrelet 4. Un sommet 7, sur lequel est prévue une bande de roulement 8, assure la jonction entre les flancs. Le sommet comporte de préférence au moins une ceinture de renfort.

Le pneumatique comporte une structure de renfort de type carcasse 2, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité 21 de la structure de renfort 2 sont situées dans les bourrelets.

La structure de renfort 2 peut être réalisée par enroulement d'un seul fil faisant des aller-retours entre les deux bourrelets en formant dans chacun des bourrelets des boucles. Ces boucles, enrobées dans le mélange caoutchoutique, contribuent à la liaison mécanique entre la structure de renfort 2 et le bourrelet, notamment les piles 13. Par la présence de boucles entre le parcours "aller" et le "retour" du fil, on voit que le renforcement est de type monofilament. Bien entendu, la carcasse pourrait ne pas être fabriquée de façon continue à partir d'un seul fil, et il pourrait ne pas y avoir de boucles, mais par exemple des extrémités libres

Le bourrelet comporte par ailleurs une zone d'ancrage 30 sensiblement circonférentielle et comprenant un arrangement de fils circonférentiels disposés de façon sensiblement adjacente à une portion de la structure de renfort et comprend au moins deux piles disposées de part et d'autre de la structure de renfort, un mélange de liaison (ou d'ancrage) étant interposé entre les fils circonférentiels et la structure de renfort.

Dans la zone d'ancrage, au moins un fil 12 d'une des piles 13 est de préférence disposé à proximité immédiate d'une portion 21 de la structure de renfort 2. Les piles peuvent également être agencées de façon à ce qu'une portion 21 soit intercalée entre des piles 13.

Dans la zone d'ancrage, l'espace entre les fils 12 et la structure de renfort 2 est occupé par un mélange caoutchoutique de liaison 14. On peut également prévoir l'utilisation de plusieurs mélanges ayant des caractéristiques différentes, délimitant plusieurs zones, les combinaisons de mélanges et les agencements résultants étant quasi-illimités. Selon une variante avantageuse, on prévoit la présence d'un mélange de gomme à sensiblement haut module d'élasticité dans la zone d'intersection entre l'arrangement de fils 11 et la structure de renfort 2. A titre d'exemple non limitatif, le module d'élasticité d'une telle gomme peut atteindre 10 à 20 et même dépasser 40 Mpa.

Les arrangements de fils 11 peuvent être agencés et fabriqués différemment. Par exemple, une pile 13 peut avantageusement être constituée d'un seul fil 12, enroulé (sensiblement à zéro degrés) en spirale, de préférence depuis le plus petit diamètre vers le plus grand diamètre. Une pile peut également être constituée de plusieurs fils concentriques posés l'un dans l'autre.

Les figures 2 et 3 illustrent des exemples de bourrelets dont les zones d'ancrages 30 sont agencées dans ledit bourrelet de façon à ce que, à pression normale, les efforts de la structure de renfort se répartissent de façon sensiblement homogène de part et d'autre de ladite structure, dans ladite zone d'ancrage.

Il s'agit d'une structure sensiblement insensible aux variations de pression puisque lors du gonflage du pneumatique, entre des valeurs de pression nulle et une pression normale de fonctionnement (ou pression de service) (comme par exemple entre 1.5 et 3 bars pour un véhicule de type tourisme, et plus particulièrement entre 1.8 et 2.5 bars), la répartition de pression le long de la zone d'appui reste similaire.

Une telle stabilité dynamique peut avantageusement être obtenue par une disposition symétrique des éléments d'ancrage, notamment des fils circonférentiels qui sont dans ces deux exemples répartis de façon symétrique de part et d'autre de la structure de renfort. Ainsi, à la figure 2, on retrouve une disposition des fils circonférentiels en forme de « T » inversé : deux piles sensiblement plus hautes (six fils ou 6 tours dans l'exemple) entourent la portion 21 de la structure de renfort, et quatre piles moins hautes (deux fils ou deux tours dans l'exemple) sont disposées de chaque côté des deux piles centrales. Dans l'exemple de la figure 3, la disposition évoque plutôt une pyramide à sommet tronqué : de chaque côté de la structure de renfort, des piles de moins en moins hautes sont disposées au fur et à mesure qu'on s'éloigne de la structure de renfort. Dans cet exemple, la pile la plus haute compte dix fils ou dix tours, la pile suivante en compte cinq, puis la plus éloignée en compte deux.

La zone d'ancrage est avantageusement prévue à proximité immédiate du centre d'inertie CP du bourrelet. Dans l'exemple de la figure 2, le CP est en effet localisé au niveau d'une des piles centrales, c'est à dire une des piles voisines de la structure de renfort.

La répartition des efforts le long de la zone d'appui peut être progressive (de façon linéaire ou non) mais est avantageusement répartie de façon sensiblement symétrique de part et d'autre de la structure de renfort.

Dans l'exemple de réalisation illustré à la figure 3, le bourrelet comporte également une zone d'appui 50, disposée sensiblement entre la zone d'ancrage et le siège du bourrelet, sensiblement alignée axialement avec ces zones, ladite zone étant adaptée pour une mise en compression lors du montage du pneumatique sur une jante adaptée. Cette mise en compression contribue à assurer le serrage du pneumatique, en transmettant l'effort de serrage produit par la zone de serrage. Le mélange caoutchoutique de cette zone est sélectionné de façon à procurer une bonne résistance au fluage, afin d'assurer la pérennité des caractéristiques de serrage.

La portion du bourrelet comprise entre la partie adjacente au rebord ou crochet 60 de jante et la zone d'ancrage comprend une zone latérale extérieure 17 ou zone d'arrêt, occupée ou constituée de préférence par un mélange caoutchoutique de sensiblement haut module, par exemple compris entre 10 et 40 Mpa.

Cette zone permet d'augmenter la pression de serrage, notamment dans la région du crochet de jante, en transmettant les efforts de la zone d'ancrage vers ledit crochet Grâce à sa déformabilité réduite, elle permet de limiter la tendance du bourrelet à glisser radialement extérieurement au-delà du crochet de jante. Elle contribue par ailleurs d'une part à inhiber toute tendance à générer un moment de rotation, et d'autre part à établir une stabilité dynamique, comme par exemple lors de virages ou de sollicitations latérales importantes.

De manière avantageuse, la zone latérale extérieure 17 est prévue dans la portion axialement externe du bourrelet et s'étend entre la portion adjacente au crochet de jante et la zone d'ancrage. Elle comporte une portion adjacente à la zone d'ancrage, ce qui permet une meilleure action mécanique entre ladite zone d'ancrage et la portion du bourrelet adjacente au crochet de jante.

Le pneumatique selon l'invention est particulièrement adapté pour être utilisé sur une jante du type de celle décrite dans le document EP 0 673 324. Une telle jante comporte un siège et de préférence un rehaussement ou rebord situé axialement et radialement vers l'extérieur.

Les bases des piles (les fils radialement les plus près de l'axe de rotation du pneumatique) sont de préférence disposées radialement plus à l'extérieur que l'extrémité dudit rebord (portion axialement et radialement la plus à l'extérieur dudit rebord) tel qu'illustré par exemple à la figure 3. Les bases des piles sont avantageusement prévues de façon à être disposées radialement extérieurement par rapport au rebord de la jante 60 (ou crochet de jante) adaptée au pneumatique. Les opérations de montage/démontage sont alors facilitées. Ainsi, à la figure 2, on constate que r_{f} (rayon des premiers fils) est supérieur à rⱼ (rayon du rebord ou crochet de jante). Ce rayon correspond à la distance depuis l'axe de rotation.

Les différents exemples de réalisations décrites et/ou illustrées peuvent avantageusement être réalisées avec des dispositifs du type de ceux décrits dans le document EP 0 580 055.

Ainsi par exemple, il est très avantageux de confectionner le pneumatique sur un noyau central imposant la forme de sa cavité intérieure. On applique sur ce noyau, de préférence dans l'ordre requis par l'architecture finale, tous les constituants du pneumatique, qui sont disposés directement à leur place finale, selon un profil sensiblement final. Dans ce cas, un tel pneumatique peut être moulé et vulcanisé comme exposé dans le document US 4 895 692.

## Revendications

1. Pneumatique (1) pour roue de véhicule, comprenant
- deux flancs (5, 6) espacés axialement l'un de l'autre, réunis à leurs portions radialement extérieures par une zone de sommet (7) pourvue sur sa portion radialement extérieure d'une bande de roulement (8) circonférentielle ;
- des bourrelets (3, 4), disposés radialement intérieurement à chacun des flancs, chaque bourrelet (3, 4) comportant un siège et un rebord externe destinés à venir en contact avec une jante adaptée ;
- une structure de renfort (2) s'étendant sensiblement radialement depuis chacun des bourrelets (3, 4), le long des flancs (5, 6), vers la zone sommet (7) ;
- au moins un desdits bourrelets (3, 4) comprenant :
- un siège de bourrelet comportant une génératrice dont l'extrémité axialement intérieure est sur un cercle de diamètre supérieur au diamètre du cercle sur lequel se trouve l'extrémité axialement extérieure ;
- une zone d'ancrage (30) de la structure de renfort (2) dans ledit bourrelet, comprenant un arrangement de fils circonférentiels (12) disposés de façon sensiblement adjacente à une portion de la structure de renfort (2) et comprenant au moins deux piles (13) réparties de part et d'autre de la structure de renfort (2), un mélange de liaison (14) étant disposé entre les fils circonférentiels (12) et la structure de renfort ;
- une zone d'appui (50) dudit bourrelet s'étendant sensiblement le long du siège de celui-ci ;
**caractérisé en ce que**
- lequel l'arrangement de fils circonférentiels (12) de la zone d'ancrage (30) est réparti de façon symétrique de part et d'autre de la structure de renfort et **en ce que** le centre d'inertie se situe au niveau d'une des piles de la structure de renfort.

2. Pneumatique pour roue de véhicule selon la revendication 1, comprenant également une zone latérale extérieure (17) disposée dans la zone du bourrelet prévue pour être disposée entre le crochet (60) de jante et la zone d'ancrage (30), ladite zone (17) étant meublée par un mélange caoutchoutique de sensiblement haut module.

3. Pneumatique pour roue de véhiculé selon la revendication 2, dans lequel la zone latérale extérieure (17) est prévue dans la portion axialement externe du bourrelet (3, 4) et s'étend entre la portion adjacente au crochet (60) de jante et la zone d'ancrage (30).

4. Pneumatique pour roue de véhicule selon l'une des revendications 2 ou 3, dans lequel la zone latérale extérieure (17) coopère avec la zone d'ancrage (30).

## Claims

1. A tire (1) for a vehicle wheel, comprising:
- two sidewalls (5,6) spaced apart axially and joined together by their radially outer portions by a crown region (7) provided on its radially outer portion with a circumferential tread (8);
- beads (3,4) placed radially to the inside with respect to each of the sidewalls, each bead (3,4) having a seat and an external flange which are intended to come into contact with a suitable rim;
- a reinforcement structure (2) extending approximately radially from each of the beads (3,4), along the sidewalls (5,6), towards the crown region (7);
- at least one of the said beads (3,4) comprising:
- a bead seat having a generatrix whose axially inner end lies on a circle of diameter greater than the diameter of the circle on which the axially outer end lies,
- an anchoring region (30) in which the reinforcement structure (2) is anchored in the said bead, comprising a grouping of circumferential threads (12) placed substantially adjacent to one portion of the reinforcement structure (2) and comprising at least two stacks (13) distributed on either side of the reinforcement structure (2), a bonding mix (14) being placed between the circumferential threads (12) and the reinforcement structure,
- a bearing region (50) of the said bead extending substantially along the bead seat;
**characterised in that** the grouping of circumferential threads (12) in the anchoring region (30) is distributed symmetrically on either side of the reinforcement structure and **in that** the centre of inertia of the bead is in the immediate vicinity of one of the stacks of said reinforcement structure.

2. A tire for a vehicle wheel according to claim 1, which also includes an outer lateral region (17) placed in that region of the bead which is designed to be positioned between the flange (60) of the rim and the anchoring region (30), the said region (17) preferably being furnished with a rubber mix of substantially high modulus.

3. A tire for a vehicle wheel according to claim 2, in which the outer lateral region (17) is provided in the axially external portion of the bead (3,4) and extends between the portion adjacent to the rim flange (60) and the anchoring region (30).

4. A tire for a vehicle wheel according to any of claims 2 or 3, in which the outer lateral region (17) cooperates with the anchoring region (30).

## Patentansprüche

1. Luftreifen (1) für ein Fahrzeugrad, der aufweist:
- zwei Flanken (5, 6) mit axialem Abstand zueinander, die an ihren radial äußeren Abschnitten durch eine Scheitelzone (7) vereint sind, die in ihrem radial äußeren Abschnitt mit einer Umfangslauffläche (8) versehen ist;
- Wülste (3, 4), die radial innen bezüglich jeder der Flanken vorgesehen sind, wobei jeder Wulst (3, 4) einen Sitz und einen äußeren Rand aufweist, die dazu bestimmt sind, mit einer geeigneten Felge in Kontakt zu kommen;
- eine Verstärkungsstruktur (2), die sich im Wesentlichen radial von jedem der Wülste (3, 4) entlang der Flanken (5, 6) zur Scheitelzone (7) erstreckt;
- wobei mindestens einer der Wülste (3, 4) aufweist:
- einen Wulstsitz mit einer Mantellinie, deren axial inneres Ende sich auf einem Kreis mit einem größeren Durchmesser als der Durchmesser des Kreises befindet, auf dem sich das axial äußere Ende befindet;
- eine Verankerungszone (30) der Verstärkungsstruktur (2) im Wulst, die eine Anordnung von Umfangsfäden (12)aufweist, die im Wesentlichen einem Abschnitt der Verstärkungsstruktur (2) benachbart angeordnet sind, und die mindestens zwei Stapel (13) aufweist, die zu beiden Seiten der Verstärkungsstruktur (2) verteilt sind, wobei eine Verbindungsmischung (14) zwischen den Umfangsfäden (12) und der Verstärkungsstruktur angeordnet ist;
- eine Auflagezone (50) des Wulsts, die sich im Wesentlichen entlang von dessen Sitz erstreckt;
**dadurch gekennzeichnet, dass**
- die Anordnung von Umfangsfäden (12) der Verankerungszone (30) symmetrisch zu beiden Seiten der Verstärkungsstruktur verteilt ist und dass sich der Trägheitsmittelpunkt auf der Höhe eines der Stapel der Verstärkungsstruktur befindet.

2. Luftreifen für ein Fahrzeugrad nach Anspruch 1, der ebenfalls eine äußere seitliche Zone (17) aufweist, die in der Zone des Wulsts angeordnet ist, die vorgesehen ist, um zwischen dem Felgenhorn (60) und der Verankerungszone (30) angeordnet zu werden, wobei diese Zone (17) mit einer Kautschukmischung mit im Wesentlichen hohem Modul gefüllt ist.

3. Luftreifen für ein Fahrzeugrad nach Anspruch 2, bei dem die äußere seitliche Zone (17) im axial äußeren Abschnitt des Wulsts (3, 4) vorgesehen ist und sich zwischen dem dem Felgenhorn (60) benachbarten Abschnitt und der Verankerungszone (30) erstreckt.

4. Luftreifen für ein Fahrzeugrad nach einem der Ansprüche 2 oder 3, bei dem die äußere seitliche Zone (17) mit der Verankerungszone (30) zusammenwirkt.
